# EUROPÄISCHE PATENTSCHRIFT

(11) **EP 2 528 773 B1**
(45) Veröffentlichungstag und Bekanntmachung des Hinweises auf die Patenterteilung: **17.07.2019**
(21) Anmeldenummer: 10803224.4
(22) Anmeldetag: 14.12.2010
(51) Int. Cl.: B60N 2/70, B60N 2/90, B29C 70/08

(54) **VERFAHREN ZUR HERSTELLUNG EINES HYBRID-POLSTERELEMENTS, INSBESONDERE EINES SITZ- UND LEHNENPOLSTERELEMENTS ZUR VERWENDUNG IN EINEM KRAFTFAHRZEUG, EIN POLSTERELEMENT UND EIN FAHRZEUGSITZ MIT EINEM POLSTERELEMENT**
METHOD FOR PRODUCING A HYBRID PADDING, IN PARTICULAR OF A SEAT- UND BACKREST- PADDING FOR USE IN AN AUTOMOTIVE VEHICLE, A PADDING AND A VEHICLE SEAT WITH A PADDING
PROCÉDÉ DE FABRICATION D'UN REMBOURRAGE HYBRIDE, EN PARTICULIER D'UN REMBOURRAGE POUR UN COUSSIN ET UN DOSSIER POUR L'UTILISATION DANS UN VÉHICULE AUTOMOBILE, UN REMBOURRAGE ET SIÈGE DE VÉHICULE AVEC UN REMBOURRAGE

(30) Priorität: 27.01.2010 DE 102010005994
(43) Veröffentlichungstag der Anmeldung: 05.12.2012
(73) Patentinhaber: Adient Luxembourg Holding S.à r.l., 1855 Luxembourg (LU)
(72) Erfinder: KLUSMEIER, Werner, 32312 Lübbecke (DE); JANZ, Michael, 32609 Hüllhorst (DE); WEINGÄRTNER, Andreas, 32351 Stemwede (DE)
(74) Vertreter: Schwöbel, Thilo K.
(86) Internationale Anmeldenummer: PCT/EP2010/007603
(87) Internationale Veröffentlichungsnummer: WO 2011/103902

(56) Entgegenhaltungen:
- WO-A1-2006/105874
- WO-A2-2004/082989
- WO-A2-2010/012469
- DE-C1- 19 628 698
- GB-A- 837 589
- GB-A- 880 554
- US-A- 4 163 091

## Beschreibung

Die Erfindung bezieht sich auf ein Verfahren zur Herstellung eines Polsterelements. Die Erfindung betrifft weiterhin ein Polsterelement und einen Fahrzeugsitz mit einem Polsterelement.

Über 90 % der Polsterauflagen für Sitze und Lehnen im Möbel- und Automobilbereich bestehen aus Polyurethanweichschaum (PUR-Weichschaum). Der Hauptgrund für die überdurchschnittliche Präsenz von Polyurethanweichschaum in Polsterauflagen liegt im vergleichsweise geringen Preis des Endproduktes begründet. Nachteilig an diesen Polsterauflagen aus PUR-Schaum ist, dass das Sitzklima vergleichsweise schlecht ist. Bei gleicher Kontur und gleichem Aufbau ist aufgrund der Nacharbeit wie Stanzen und Schleifen bei der Verwendung von Fasern die Polsterauflage teurer. Allerdings hat das Faserbauteil stets den Vorteil des besseren Sitzklimas.

Aus dem Stand der Technik sind verschiedene Verfahren zur Herstellung solcher Polsterauflagen aus Faserverbundwerkstoff - beispielsweise aus Kokosfasern und Latex als Bindemittel - für einen Kraftfahrzeugsitz bekannt.

Beim sogenannten Gummihaarverfahren werden zuerst Flore aus Fasern und dem Bindemittel Latex gelegt. Aus den Floren werden Stanzlinge gestanzt, die nochmals mit Latex besprüht werden und anschließend manuell in Werkzeuge eingelegt bzw. eingebaut werden. Durch die Werkzeuge wird ca. 120°C heiße Luft geleitet, so dass das Latex/Fasergemisch im Werkzeug trocknet, wonach das geformte und getrocknete Polsterteil aus dem Werkzeug entnommen wird. Danach muss das Polsterteil beschnitten oder gestanzt werden. Anschließend wird der beim Schneiden oder beim Stanzen entstandene Grat durch manuelles Schleifen entfernt. Der letzte Arbeitsschritt ist das Vulkanisieren der Teile in einem Autoklav, wobei auch häufig die Vulkanisation direkt nach der Entformung der Polsterauflagen geschehen kann. Diese Prozessschritte können je nach Kontur und Geometrie des Bauteiles vertauscht werden. Üblicherweise können dann die Polsterauflagen weiterhin veredelt werden, indem bestimmte Bereiche mit Schaum oder auch mit Vlies kaschiert werden. Nachteilig bei diesem Verfahren ist, dass es vergleichsweise aufwändig und teuer ist.

Ein weiteres Serienverfahren - bekannt unter dem Begriff "FaserTec" zeichnet sich dadurch aus, dass nicht Flore mit einer Legemaschine gefertigt werden müssen, sondern die Fasern mit dem Bindemittel (z. B. Latex) direkt durch einen Streukopf in Werkzeuge gestreut werden. Durch diese Verbesserung des Verfahrens konnte der Legeprozess eingespart werden, allerdings sind alle nachgeschalteten mechanischen Eingriffe wie Schneiden, Stanzen oder Schleifen einzeln oder in Kombination nach wie vor unverzichtbar. Üblicherweise sind bei dem FaserTec Verfahren die Werkzeuge auf Rundtischen angeordnet mit 4 oder 5 Werkzeugen. Hauptprozesse dieser Anordnung sind das Streuen der Fasern und des Bindemittels in das Werkzeug und der Trocknungsvorgang. Anschließend werden die Teile geschnitten und/oder gestanzt, geschliffen und vulkanisiert wie beim klassischen Gummihaarverfahren. Nachteilig bei diesem Verfahren ist, dass es vergleichsweise aufwändig und teuer ist.

In Ergänzung der beschriebenen in Serie befindenden Gummihaar- und FaserTec Verfahren gibt es noch weitere Entwicklungen von Verfahren, die als Grundwerkstoff Polyesterfasern aufweisen. Hierbei handelt es sich um das sogenannte Neocurle-Verfahren, indem Polyethersulfon oder Polyethylenterephthalat Fasern (kurz: PES/PET Fasern) mit einem Bindemittel wie beispielsweise PUR benetzt und anschließend das Polsterteil in einem taumelnden Werkzeug ausreagiert. Dieses Vorfahren ist sehr aufwändig und teuer.
Aus der WO 2004/082989 A2 ist ein Polsterelement, insbesondere ein Sitzpolsterelement zur Verwendung in einem Kraftfahrzeug bekannt, wobei das Polsterelement eine Vlieslage und einen Faserverbundwerkstoff aufweist, wobei zwischen der Vlieslage und dem Faserverbundwerkstoff ein Einlegematerial angeordnet ist.
Weiterhin ist aus der WO 2006/105874 A1 ein Verfahren zur Herstellung eines Polsterelements bekannt, wobei ein ein Einlegematerial umfassendes Vorläufermaterial in einem Formwerkzeug geformt wird, und darauf ein Faserverbundwerkstoff angeordnet wird, wobei der Faserverbundwerkstoff Fasern umfasst, wobei eine bindemittelhaltige Emulsion sowie die Fasern derart auf das Einlegematerial aufgetragen werden, dass auf dessen Oberfläche eine wirre Schicht von mit Bindemittel benetzten Fasern ausgebildet wird, wobei die Schicht mit Trocknungsluft zu einem zwar elastischen, aber formstabilen Formkörper trocknet, welcher ohne weitere Maßnahmen mit dem Einlegematerial über das Bindemittel verbunden ist.

Der Erfindung liegt die Aufgabe zugrunde, die für Polsterelemente, die nach den zuvor genannten Verfahren hergestellt werden, geltenden Nachteile zu vermeiden.

Die Aufgabe wird erfindungsgemäß durch ein Polsterelement nach Anspruch 1 und ein Verfahren nach Anspruch 8 gelöst, wobei PES/PET Fasern mit einem Bindemittel auf Polyurethanbasis oder auf Chloroprenbasis zu einem zwar elastischen, aber formstabilen Formkörper getrocknet sind bzw. getrocknet werden, wobei das Bindemittel bei einer Temperatur kleiner als 120°C aushärtbar ist. Diese Temperatur liegt somit deutlich unter der Aushärttemperatur eines natürlichen Latexbindemittels. Durch die geringe Trocknung wird die Verweildauer des Bauteils im Werkzeug wesentlich reduziert. Die einzelnen eingelegten Materialien sind Wärme/Hitze nicht so lange ausgesetzt.

Das erfindungsgemäße Polsterelement hat gegenüber dem Stand der Technik den Vorteil, dass es möglich ist, nicht nur Fasern oder Fasermatten als zusätzliche Einlegekomponenten zu verwenden, sondern darüber hinaus auch Einleger aus anderen Materialien wie z.B. PUR Form- und Schnittschaum, technische Textilien, geruchshemmende Aktivkohlematten, fahrdynamische Module oder Hohlkörper für Kabel- und Luftführungen verwenden zu können. Es sind keine Vulkanisation und keine intensive Trocknung des Bindemittels notwendig, sodass es möglich ist, Einleger während der Herstellung einzulegen, ohne dass die eingelegten Materialien durch die hohe Temperatur und die hohe Feuchte Schaden erleiden.

Dabei ist bevorzugt, dass das Bindemittel bei einer Temperatur kleiner als 100°C aushärtbar ist, weiter ist bevorzugt, dass das Bindemittel bei einer Temperatur kleiner als 80°C aushärtbar ist, weiter ist bevorzugt, dass das Bindemittel bei einer Temperatur kleiner als 60°C aushärtbar ist, weiter ist bevorzugt, dass das Bindemittel bei einer Temperatur kleiner als 40°C aushärtbar ist, weiter ist bevorzugt, dass das Bindemittel bei einer Temperatur kleiner als 30°C aushärtbar ist, weiter ist bevorzugt, dass das Bindemittel bei einer Temperatur kleiner als 25°C aushärtbar ist, weiter ist bevorzugt, dass das Bindemittel bei einer Temperatur kleiner als 15°C aushärtbar ist, weiter ist bevorzugt, dass das Bindemittel bei einer Temperatur kleiner als 5°C aushärtbar ist. Dadurch ist es vorteilhaft möglich, Einleger während der Herstellung einzulegen, ohne dass die eingelegten Materialien durch die hohe Temperatur und die hohe Feuchte Schaden erleiden. Insbesondere werden durch den Wegfall der Vulkanisation bei hoher Temperatur und hohem Druck die eingelegten Materialien vergleichsweise wesentlich schonender behandelt.

Weiter ist bevorzugt, dass das Einlegematerial ein Vliesmaterial oder eine Matte ist, wobei das Vliesmaterial oder die Matte natürliche oder synthetische Fasern aufweist. Hierdurch ist eine große Vielzahl unterschiedlicher Materialien zur Erzeugung unterschiedlicher Komfortansprüche bzw. Anwendungsfälle mit dem erfindungsgemäßen Verfahren benutzbar, beispielsweise PES/PET (Polyethylenterephthalat)/PLA (Polylactide) - Fasern.

Weiterhin ist bevorzugt, wenn das Einlegematerial weicher als der Faserverbundwerkstoff ist. Hierdurch kann in einfacher Weise ein besonders weiches Ansitzverhalten des erfindungsgemäßen Polsterkörpers realisiert werden.

Es ist weiterhin auch bevorzugt, dass das Einlegematerial ein technisch hergestelltes gewebtes oder gesponnenes Vlies ist. Hierdurch kann erfindungsgemäß in vorteilhafter Weise das Polsterelement besonders variabel und kostengünstig hergestellt werden.

Weiterhin ist es bevorzugt, dass das Einlegematerial ein geringeres spezifisches Gewicht aufweist als der Faserverbundwerkstoff. Hierdurch kann in besonders einfacher und kostengünstiger Weise ein besonders leichtes Polsterelement realisiert werden.

Weiterhin ist bevorzugt, dass das Einlegematerial ein flächig angeordnetes Polyurethanmaterial umfasst. Durch die Verwendung eines PUR-Weichschaumzuschnittes ist es vorteilhaft möglich, dass ein besonders weiches Ansitzverhalten erreicht werden kann. Weiter bevorzugt umfasst das Einlegematerial ein flächig angeordnetes gelochtes Polyurethanmaterial, wodurch vorteilhaft eine vergleichsweise sehr gute aktive und passive Belüftung erreicht werden kann.

Weiterhin ist bevorzugt, dass das Einlegematerial eine Aktivkohlematte umfasst. Durch die Verwendung einer Aktivkohlematte sind vorteilhaft eine Geruchsreduzierung sowie eine Absorption von Schadstoffen im Autoinnenraum möglich.

Weiterhin ist bevorzugt, dass das Einlegematerial ein aufpumpbares Luftkissen aufweist. Durch die Verwendung eines aufpumpbaren Luftkissens ist vorteilhaft eine einfache und kostengünstige Integration von Massagemodulen, die die Muskulatur des Sitzbenutzers während des Sitzens massieren, möglich, so dass der Sitzkomfort erheblich gesteigert werden kann.

Weiterhin ist bevorzugt, dass das Einlegematerial einen Heizdraht aufweist. Durch die Integration eines Heizdrahtes oder bevorzugt einer Wärmedecke, die eine Vielzahl an Heizdrähten umfasst, ist es auf einfache und kostengünstige Weise vorteilhaft möglich, dass der Sitzkomfort erheblich gesteigert werden kann.

Weiterhin ist bevorzugt, dass das Einlegematerial lediglich über einen Teilbereich der Oberfläche des Polsterelements erstreckt vorgesehen ist bzw. dass wenigstens zwei unterschiedliche Einlegematerialien vorgesehen sind, wobei die wenigstens zwei unterschiedlichen Einlegematerialien in unterschiedlichen Oberflächenbereichen des Polsterelements angeordnet sind. Erfindungsgemäß ist es hierdurch in vorteilhafter Weise möglich, dass in dem Polsterelement nicht alle Oberflächenzonen mit dem Einlegematerial belegt sind bzw. dass verschiedene Oberflächenzonen realisiert werden können, so dass der Benutzungskomfort bei einem sehr geringen Mehraufwand nochmals erhöht werden kann.

Ein weiterer Gegenstand der vorliegenden Erfindung betrifft einen Fahrzeugsitz, insbesondere für ein Kraftfahrzeug, umfassend ein Sitzteil und ein Lehnenteil, wobei das Sitzteil und/oder das Lehnenteil ein erfindungsgemäßes Polsterelement aufweist.

Ausführungsformen der Erfindung sind in der Zeichnung dargestellt und in der nachfolgenden Beschreibung näher erläutert.
Figur 1 zeigt schematisch einen erfindungsgemäßen Fahrzeugsitz mit einem Sitzteil und einem Lehnenteil in Seitenansicht.
Figuren 2a bis 2d zeigen jeweils einen von vier Fertigungsschritten einer Ausführungsform des erfindungsgemäßen Verfahrens.
Figuren 3 und 4 zeigen schematisch jeweils eine Ausführungsform eines erfindungsgemäßen Polsterelements eines Fahrzeugsitzes, insbesondere entweder des Sitzteils oder des Lehnenteils, in einer schematischen Schnittdarstellung.

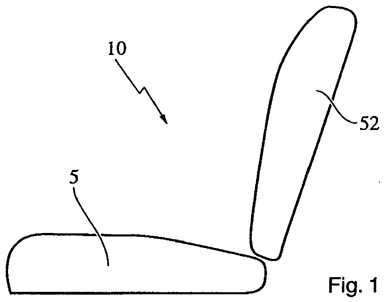

Die Figur 1 zeigt schematisch einen erfindungsgemäßen Fahrzeugsitz 10 in einer Seitenansicht. Der Fahrzeugsitz 10 weist ein Sitzteil 5 und ein Lehnenteil 52 mit jeweils einem die Trägerstruktur des Sitz- oder Lehnenteils aus Metall oder Kunststoff überdeckenden Polsterung bzw. einem Sitzpolsterelement 21 auf, das der Erhöhung des Sitzkomforts dient.

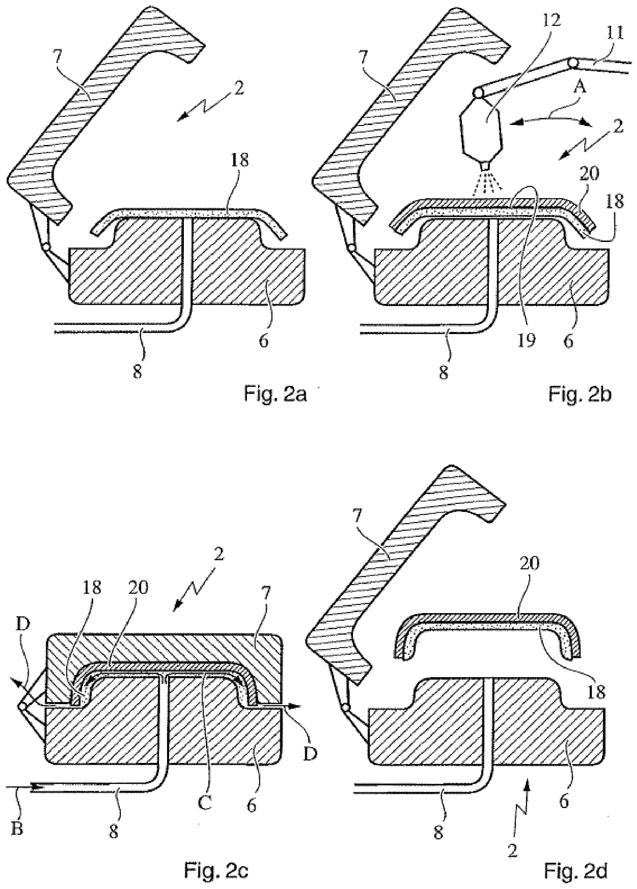

Fig. 2a bis Fig. 2d zeigen schematisch, dass bei der Durchführung des erfindungsgemäßen Verfahrens zuerst ein Zuschnitt des Einlegematerials 18 auf das Unterwerkzeug 6 aufgelegt wird. Dieser Vorgang kann manuell oder automatisiert erfolgen (Fig. 2a). Anschließend werden, wie in Fig. 2b gezeigt, mittels des Sprühkopfes 12 die bindemittelhaltige Emulsion sowie die Fasern auf das Einlegematerial 18 derart aufgetragen, dass sich auf deren Oberfläche 19 eine relativ dicke, wirre Schicht 20 von mit Bindemittel benetzten Fasern ausbildet. Die Schwenkbewegungen des Sprühkopfes 12 sind durch den Pfeil A angedeutet. Durch Schließen des Werkzeugs (Fig. 2b) werden das Einlegematerial 18 und die Schicht 20 zu einem komplexen Formkörper gepresst (Fig. 2c). Nicht dargestellte Schieber im Werkzeug 2 können dabei Bereiche des Formkörpers in besonderer Weise umformen oder verdichten. Dadurch können auch hinterschnittige Bauteile erzeugt werden. Die über den Luftkanal 8 im Unterwerkzeug 6 zugeführte Trocknungsluft (Pfeil B) kann sich im Einlegematerial 18 parallel zu dessen Flächenseiten verteilen (durch Pfeile C angedeutet) und im Bereich der Trennung zwischen Unter- und Oberwerkzeug 6, 7 sowie durch nicht dargestellte Entlüftungsbohrungen im Oberwerkzeug 7 nach außen entweichen (durch Pfeil D angedeutet). Dabei wird der aufgesprühten Emulsion von der Trocknungsluft soviel Wasser entzogen, dass die Schicht 20 zu einem zwar elastischen, aber formstabilen Formkörper trocknet, welcher ohne weitere Maßnahmen mit dem Einlegematerial 18 über das Bindemittel verbunden ist. Die wirren Fasern sind dabei so voneinander beabstandet, dass auch die Schicht 20 luftdurchlässig ist, auch wenn deren Strömungswiderstand (bei Strömung parallel zur Flächenseite betrachtet) deutlich größer als innerhalb des Einlegematerials 18 ist. Wie in Fig. 2d dargestellt, kann das so entstandene Polsterelement nach dem Öffnen des Werkzeugs 2 entnommen werden. Eine anschließende Vulkanisation ist nicht mehr notwendig.

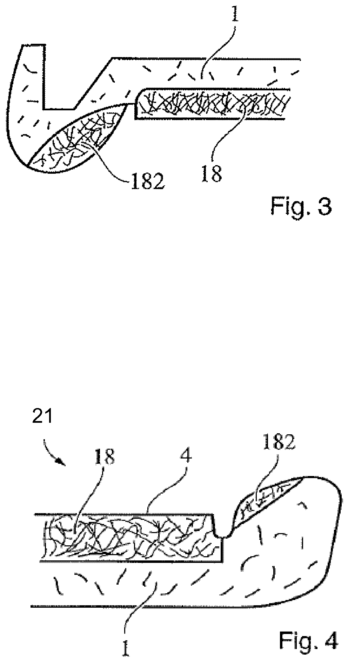

Figuren 3 und 4 stellen schematisch jeweils eine Ausführungsform eines erfindungsgemäßen Polsterelements 21 eines Fahrzeugsitzes 10 für das Sitz- bzw. das Lehnenteil 5, 52 in einer Schnittdarstellung dar. Das Polsterelement 21 weist einen Faserverbundwerkstoff 1 sowie eine Vlieslage 4 auf. Bei der Vlieslage 4 handelt es sich beispielsweise um Faservliese auf natürlicher oder synthetischer Basis. Auf der dem Faserverbundwerkstoff 1 zugewandten Seite der Vlieslage 4 ist beim erfindungsgemäßen Polsterelement 21 ein Einlegematerial 18, 182 angeordnet.

Der Faserverbundwerkstoff 1 umfasst hierbei insbesondere ein Fasermaterial mit einer konturbestimmenden Festigkeit sowie ein Bindemittel. Als Fasern werden synthetische Fasern (PES/PET) verwendet. Als Bindemittel wird ein Bindemittel verwendet, welches bei einer Temperatur kleiner als 120°C aushärtbar ist. Dabei handelt es sich um ein Bindemittel auf Polyurethanbasis oder auf Chloroprenbasis. Die Einlegematerialien 18, 182 haben insbesondere verschiedene Eigenschaften einstellbar, wodurch verschiedenste Konfigurationen des Polsterelements 21 realisierbar sind.

### Bezugszeichenliste

- 1: Faserverbundwerkstoff
- 2: (Form-) Werkzeug
- 4: Vlieslage
- 5: Sitzteil
- 52: Lehnenteil
- 6: Unterwerkzeug
- 7: Oberwerkzeug
- 8: Luftkanal
- 10: Fahrzeugsitz
- 11: Arm
- 12: Sprühwerkzeug
- 18: Einlegematerial
- 182: weiteres Einlegematerial
- 19: Oberfläche des Einlegematerials
- 20: Schicht aus wirren, benetzten Fasern
- 21: Polsterelement

## Patentansprüche

1. Polsterelement (21), insbesondere ein Sitzpolsterelement zur Verwendung in einem Kraftfahrzeug, wobei das Polsterelement (21) eine Vlieslage (4) und einen Faserverbundwerkstoff (1) aufweist, wobei zwischen der Vlieslage (4) und dem Faserverbundwerkstoff (1) ein Einlegematerial (18) angeordnet ist, **dadurch gekennzeichnet, dass** der Faserverbundwerkstoff (1) PES/PET-Fasern umfasst, wobei der Faserverbundwerkstoff (1) ein Bindemittel auf Polyurethanbasis oder auf Chloroprenbasis aufweist, wobei das Bindemittel bei einer Temperatur kleiner als 120°C aushärtbar ist, wobei eine bindemittelhaltige Emulsion sowie Fasern auf das Einlegematerial (18) derart aufgetragen sind, dass auf dessen Oberfläche (19) eine wirre Schicht (20) von mit Bindemittel benetzten Fasern ausgebildet ist, wobei der aufgetragenen Emulsion von Trocknungsluft so viel Wasser entzogen ist, dass die Schicht (20) zu einem zwar elastischen, aber formstabilen Formkörper getrocknet ist, welcher ohne weitere Maßnahmen mit dem Einlegematerial (18) über das Bindemittel verbunden ist, wobei sich eine anschließende Vulkanisation erübrigt.

2. Polsterelement (21) nach Anspruch 1, **dadurch gekennzeichnet, dass** das Einlegematerial (18) ein geringeres spezifisches Gewicht aufweist als der Faserverbundwerkstoff (1).

3. Polsterelement (21) nach einem der vorhergehenden Ansprüche, **dadurch gekennzeichnet, dass** das Einlegematerial (18) ein flächig angeordnetes Polyurethanmaterial umfasst.

4. Polsterelement (21) nach Anspruch 3, **dadurch gekennzeichnet, dass** das Einlegematerial (18) ein flächig angeordnetes gelochtes Polyurethanmaterial umfasst.

5. Polsterelement (21) nach einem der vorhergehenden Ansprüche, **dadurch gekennzeichnet, dass** das Einlegematerial (18) ein aufpumpbares Luftkissen aufweist.

6. Polsterelement (21) nach einem der vorhergehenden Ansprüche, **dadurch gekennzeichnet, dass** das Einlegematerial (18) einen Heizdraht aufweist.

7. Fahrzeugsitz (10), insbesondere für ein Kraftfahrzeug, umfassend ein Sitzteil (5) und ein Lehnenteil (52), **dadurch gekennzeichnet, dass** das Sitzteil (5) und/oder das Lehnenteil (52) ein Polsterelement (21) gemäß einem der Ansprüche 1 bis 6 aufweist.

8. Verfahren zur Herstellung eines Polsterelements (21), wobei ein ein Einlegematerial (18) umfassendes Vorläufermaterial in einem Formwerkzeug (2) geformt wird, wobei das Polsterelement (21) eine Vlieslage (4) und einen Faserverbundwerkstoff (1) aufweist, wobei zwischen der Vlieslage (4) und dem Faserverbundwerkstoff (1) das Einlegematerial (18) angeordnet ist, **dadurch gekennzeichnet, dass** der Faserverbundwerkstoff (1) PES/PET-Fasern umfasst, wobei der Faserverbundwerkstoff (1) ein Bindemittel auf Polyurethanbasis oder auf Chloroprenbasis aufweist, wobei das Bindemittel bei einer Temperatur kleiner als 120°C ausgehärtet wird, wobei eine bindemittelhaltige Emulsion sowie Fasern auf das Einlegematerial (18) derart aufgetragen werden, dass auf dessen Oberfläche (19) eine wirre Schicht (20) von mit Bindemittel benetzten Fasern ausgebildet wird, wobei der aufgetragenen Emulsion von Trocknungsluft so viel Wasser entzogen wird, dass die Schicht (20) zu einem zwar elastischen, aber formstabilen Formkörper trocknet, welcher ohne weitere Maßnahmen mit dem Einlegematerial (18) über das Bindemittel verbunden ist, wobei sich eine anschließende Vulkanisation erübrigt.

9. Verfahren nach Anspruch 8, **dadurch gekennzeichnet, dass** das Bindemittel bei einer Temperatur kleiner als 100°C aushärtbar ist, bevorzugt dass das Bindemittel bei einer Temperatur kleiner als 80°C aushärtbar ist, bevorzugt dass das Bindemittel bei einer Temperatur kleiner als 60°C aushärtbar ist, weiter bevorzugt dass das Bindemittel bei einer Temperatur kleiner als 40°C aushärtbar ist, weiter bevorzugt dass das Bindemittel bei einer Temperatur kleiner als 30°C aushärtbar ist, weiter bevorzugt dass das Bindemittel bei einer Temperatur kleiner als 25°C aushärtbar ist, bevorzugt dass das Bindemittel bei einer Temperatur kleiner als 15°C aushärtbar ist, bevorzugt dass das Bindemittel bei einer Temperatur kleiner als 5°C aushärtbar ist.

## Claims

1. Cushion element (21), in particular a seat cushion element for use in a motor vehicle, wherein the cushion element (21) comprises a fleece layer (4) and a fibre composite material (1), wherein an inlay material (18) is arranged between the fleece layer (4) and the fibre composite material (1), **characterized in that** the fibre composite material (1) comprises PES/PET fibres, wherein the fibre composite material (1) comprises a binder based on polyurethane or based on chloroprene, wherein the binder is curable at a temperature less than 120°C, wherein a binder-containing emulsion and fibres are applied to the inlay material (18) in such a way that a tangled layer (20) of fibres wetted with binder is formed on its surface (19), wherein a sufficient amount of water is withdrawn from the applied emulsion by the drying air that the layer (20) is dried to form a moulded body which is elastic, but is dimensionally stable, and which is bonded to the inlay material (18) via the binder without further measures, with no need for subsequent vulcanization.

2. Cushion element (21) according to Claim 1, **characterized in that** the inlay material (18) has a lower specific weight than the fibre composite material (1).

3. Cushion element (21) according to either of the preceding claims, **characterized in that** the inlay material (18) comprises a flatly arranged polyurethane material.

4. Cushion element (21) according to Claim 3, **characterized in that** the inlay material (18) comprises a flatly arranged perforated polyurethane material.

5. Cushion element (21) according to one of the preceding claims, **characterized in that** the inlay material (18) comprises an inflatable air cushion.

6. Cushion element (21) according to one of the preceding claims, **characterized in that** the inlay material (18) comprises a heating wire.

7. Vehicle seat (10), in particular for a motor vehicle, comprising a seat part (5) and a backrest part (52), **characterized in that** the seat part (5) and/or the backrest part (52) comprises a cushion element (21) according to one of Claims 1 to 6.

8. Method for producing a cushion element (21), wherein a precursor material comprising an inlay material (18) is moulded in a moulding tool (2), wherein the cushion element (21) comprises a fleece layer (4) and a fibre composite material (1), wherein the inlay material (18) is arranged between the fleece layer (4) and the fibre composite material (1), **characterized in that** the fibre composite material (1) comprises PES/PET fibres, wherein the fibre composite material (1) comprises a binder based on polyurethane or based on chloroprene, wherein the binder is cured at a temperature less than 120°C, wherein a binder-containing emulsion and fibres are applied to the inlay material (18) in such a way that a tangled layer (20) of fibres wetted with binder is formed on its surface (19), wherein a sufficient amount of water is withdrawn from the applied emulsion by the drying air that the layer (20) dries to form a moulded body which is elastic, but is dimensionally stable, and which is bonded to the inlay material (18) via the binder without further measures, with no need for subsequent vulcanization.

9. Method according to Claim 8, **characterized in that** the binder is curable at a temperature less than 100°C, preferably the binder is curable at a temperature less than 80°C, preferably the binder is curable at a temperature less than 60°C, more preferably the binder is curable at a temperature less than 40°C, more preferably the binder is curable at a temperature less than 30°C, more preferably the binder is curable at a temperature less than 25°C, preferably the binder is curable at a temperature less than 15°C, preferably the binder is curable at a temperature less than 5°C.

## Revendications

1. Élément de rembourrage (21), notamment élément de rembourrage pour sièges destiné à une utilisation dans un véhicule automobile, l'élément de rembourrage (21) comprenant une couche de non-tissé (4) et un matériau composite fibreux (1), un matériau d'insertion (18) étant agencé entre la couche de non-tissé (4) et le matériau composite fibreux (1), **caractérisé en ce que** le matériau composite fibreux (1) comprend des fibres de PES/PET, le matériau composite fibreux (1) comprenant un liant à base de polyuréthane ou à base de chloroprène, le liant étant durcissable à une température inférieure à 120 °C, une émulsion contenant un liant, ainsi que des fibres étant appliquées sur le matériau d'insertion (18), de telle sorte qu'une couche enchevêtrée (20) de fibres mouillées avec le liant soit formée sur sa surface (19), suffisamment d'eau étant extraite de l'émulsion appliquée par l'air de séchage pour que la couche (20) soit séchée en un corps moulé élastique, mais de forme stable, qui est relié sans mesures supplémentaires avec le matériau d'insertion (18) par le liant, une vulcanisation ultérieure n'étant pas nécessaire.

2. Élément de rembourrage (21) selon la revendication 1, **caractérisé en ce que** le matériau d'insertion (18) présente un poids spécifique plus faible que le matériau composite fibreux (1).

3. Élément de rembourrage (21) selon l'une quelconque des revendications précédentes, **caractérisé en ce que** le matériau d'insertion (18) comprend un matériau de polyuréthane agencé sous forme plane.

4. Élément de rembourrage (21) selon la revendication 3, **caractérisé en ce que** le matériau d'insertion (18) comprend un matériau de polyuréthane perforé agencé sous forme plane.

5. Élément de rembourrage (21) selon l'une quelconque des revendications précédentes, **caractérisé en ce que** le matériau d'insertion (18) comprend un coussin d'air gonflable.

6. Élément de rembourrage (21) selon l'une quelconque des revendications précédentes, **caractérisé en ce que** le matériau d'insertion (18) comprend un fil chauffant.

7. Siège de véhicule (10), notamment pour un véhicule automobile, comprenant une partie de siège (5) et une partie de dossier (52), **caractérisé en ce que** la partie de siège (5) et/ou la partie de dossier (52) comprennent un élément de rembourrage (21) selon l'une quelconque des revendications 1 à 6.

8. Procédé de fabrication d'un élément de rembourrage (21), selon lequel un matériau précurseur comprenant un matériau d'insertion (18) est mis en forme dans un outil de moulage (2), l'élément de rembourrage (21) comprenant une couche de non-tissé (4) et un matériau composite fibreux (1), le matériau d'insertion (18) étant agencé entre la couche de non-tissé (4) et le matériau composite fibreux (1), **caractérisé en ce que** le matériau composite fibreux (1) comprend des fibres de PES/PET, le matériau composite fibreux (1) comprenant un liant à base de polyuréthane ou à base de chloroprène, le liant étant durci à une température inférieure à 120 °C, une émulsion contenant un liant, ainsi que des fibres étant appliquées sur le matériau d'insertion (18), de telle sorte qu'une couche enchevêtrée (20) de fibres mouillées avec le liant soit formée sur sa surface (19), suffisamment d'eau étant extraite de l'émulsion appliquée par l'air de séchage pour que la couche (20) soit séchée en un corps moulé élastique, mais de forme stable, qui est relié sans mesures supplémentaires avec le matériau d'insertion (18) par le liant, une vulcanisation ultérieure n'étant pas nécessaire.

9. Procédé selon la revendication 8, **caractérisé en ce que** le liant est durcissable à une température inférieure à 100 °C, de préférence **en ce que** liant est durcissable à une température inférieure à 80 °C, de préférence **en ce que** le liant est durcissable à une température inférieure à 60 °C, de manière davantage préférée **en ce que** le liant est durcissable à une température inférieure à 40 °C, de manière davantage préférée **en ce que** le liant est durcissable à une température inférieure à 30 °C, de manière davantage préférée **en ce que** le liant est durcissable à une température inférieure à 25 °C, de préférence **en ce que** le liant est durcissable à une température inférieure à 15 °C, de préférence **en ce que** le liant est durcissable à une température inférieure à 5 °C.
